(19) Europäisches Patentamt

European Patent Office

Office européen des brevets

(11) EP 0 889 255 A1

(12) **DEMANDE DE BREVET EUROPEEN**

(43) Date de publication:
**07.01.1999 Bulletin 1999/01**

(51) Int. Cl.⁶: **F16D 1/08**, F16D 41/06

(21) Numéro de dépôt: **97420101.4**

(22) Date de dépôt: **01.07.1997**

(84) Etats contractants désignés:
**AT BE CH DE DK ES FI FR GB GR IE IT LI LU MC NL PT SE**
Etats d'extension désignés:
**AL LT LV RO SI**

(71) Demandeur: **Vavro, Lubomir**
**69700 Saint-Martin-en-Haut (FR)**

(72) Inventeur: **Vavro, Lubomir**
**69700 Saint-Martin-en-Haut (FR)**

(54) **Système de blocage d'un axe cylindrique par une came multiple autocentrante**

(57) La présente invention concerne tous les cas de serrage et d'immobilisation dans sa position déterminée, d'un axe cylindrique (1) placé dans un alésage (14) avec un jeu radial compris entre 0 et 0,3 mm, où l'effort de serrage radial résulte d'un mouvement de rotation d'une came multiple (3) à travers des aiguilles cylindriques (4)

FIG . 1

FIG . 2

EP 0 889 255 A1

## Description

La présente invention concerne un principe de blocage d'un axe cylindrique coulissant en vue d'assurer sa position axiale déterminée. Il existe en fait plusieurs systémes de blocage d'un axe afin d'assurer sa position axiale,par exemple le principe du"tampon tangent" où par l'action sur un vis de serrage on actionne un tampon fileté et par réaction aussi le tampon lisse. L'axe est dans ce cas bloqué par ces deux tampons placés dans un support fixe, par l'effort tangentiel sur l'axe à immobiliser, coulissant dans le même support fixe.

Un autre principe ,hydraulique celui ci, comporte une bague de serrage élastique déformée par la pression hydraulique, où la deformation de ladite bague permet le blocage de l'axe coulissant.

Le but de la présente invention est de proposer un systéme de blocage original, simple et facile d'utilisation, ce qui le différencie des systémes existants.

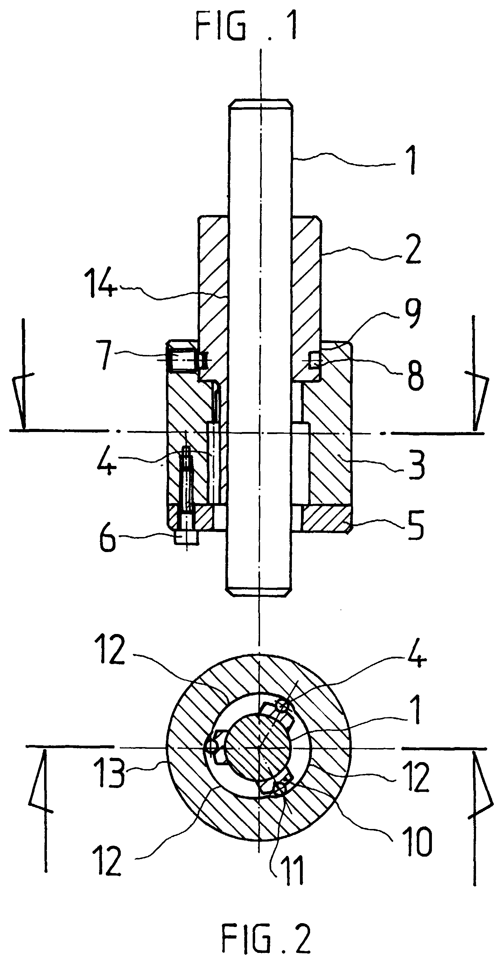

Le systéme proposé selon un exemple de réalisation, se présente comme un ensemble indépendant composé de quatre pièces principales, suivant les fig.1 et 2, la douille (2), la came multiple (3), l'axe à bloquer (1), et trois aiguilles cylindriques (4). La piéce principale ou la douille (2) comporte un alésage cylindrique (14) prévue pour guider l'axe (1).Douille (2) est fendue à une extrémitée en trois parties équidistantes (10).

Chacune de ces trois parties (10) comporte une empreinte cylindrique (11) paralléle à l'axe de la douille (2).La fonction de cette empreinte est d'assurer une position angulaire des aiguilles cylindriques (4).La douille (2) comporte par ailleurs une gorge cylindrique (8) et un guidage extérieur (9).

La deuxième pièce de l'ensemble est la came multiple (3), de préference moleté (13) celle ci comporte un vis à téton (7) ayant fonction de butée axiale, une fois en place dans la gorge (8).

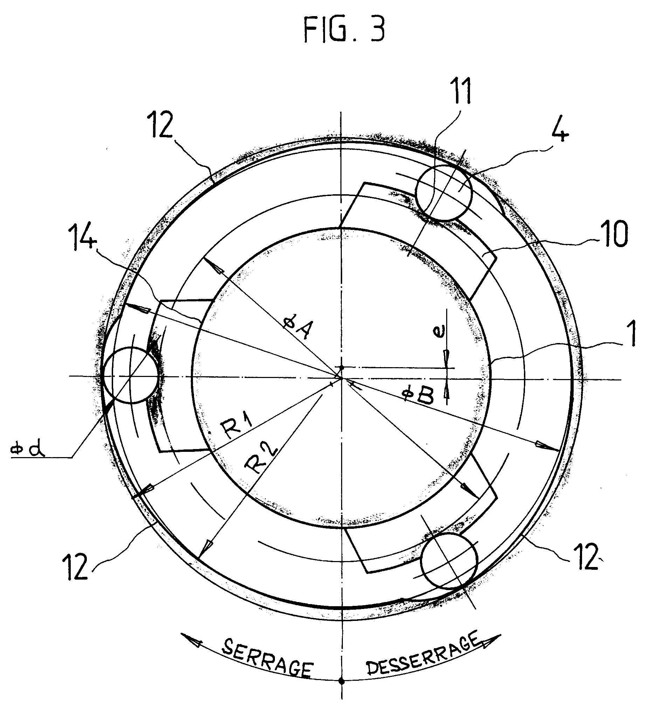

L'alésage intérieur de la canne (3) ,suivant les fig. 2 et 3 comporte trois cames équidistantes (12) où le rayon R1 exentré de "e" est plus grand que le rayon R2 concentrique à l'axe de l'ensemble et 2 R2>∅B (∅B-diamétre inscrit au sommet des trois R1).Toutefois les rayons R1 et R2 sont tangentiels à trois endroits équidistants.

La came (3) ainsi faite permet avec sa rotation dans le sens horaire le serrage de la douille (2) dans sa partie extréme (partie fendue) (10) à travers des trois aiguilles cylindriques (4) et ainsi le serrage de l'axe (1) parce que :∅A + 2∅d>∅B .

A l'envers de ceci, rotation de la came (3) dans le sens anti-horaire permet le déblocage de l'ensemble, où ∅A + 2∅d<2R1 .

L'axe (1) peut coulisser librement dans la douille (2). Serrage et desserrage de l'axe (1) s'effectuent par la rotation de la came multiple (3) dans une plage angulaire de 120° suivant les tollérances de fabrication.

L'autocentrage de la came multiple (3) résulte du fait que le jeu radial dans le centrage (9) est plus grand que l'ensemble des tollérances sur ∅A (diamétre inscrit dans le fond des trois empreinte: (11) de la douille (2), sur ∅d (diamétre de l'aiguille cylindrique (4) ) et sur R1 (rayon de la came (3) ).

L'illustration du présent systéme suivant les figures jointes est complétée par la bague (5), la quelle par le moyen des trois vis (6) assure l'impérdabilité des aiguilles cylindriques (4).

Le système de blocage d'un axe cylindrique (1) est caractérisé en ce qu'il comporte une came multiple autocentrante (3),qui permet la création d'un effort de blocage radial sur l'axe cylindrique (1) à travers un mouvement de rotation de la came multiple autocentrante (3) par l'intérmédiaire des aiguilles cylindriques (4). Le serrage d'un axe coulissant (1) dans un alésage cylindrique (14) s'effectue avec un jeu radial compris entre 0 et 0,3 mm entre l'axe coulissant (1) et son alésage (14).

## Revendications

1. Systéme de blocage d'un axe cylindrique (1) caractérisé en ce qu'il comporte une came multiple autocentrante (3), qui permet la création d'un effort de blocage radial sur l'axe cylindrique (1) à travers un mouvement de rotation de la came multiple autocentrante (3) par l'intérmédiaire des aiguilles cylindriques (4).

2. Systéme selon la revendication 1. caractérisé en ce que le serrage d'un axe coulissant (1) dans un alésage cylindrique (14) s'effectue avec un jeu radial compris entre 0 et 0,3 mm entre l'axe coulissant (1) et son alésage (14).

FIG . 1

FIG . 2

EP 0 889 255 A1

FIG. 3

4

Office européen
des brevets

**RAPPORT DE RECHERCHE EUROPEENNE**

Numéro de la demande

EP 97 42 0101

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int.Cl.6) |
|---|---|---|---|
| X | WO 96 21810 A (KER-TRAIN)<br>* page 32, ligne 12 - page 33, ligne 15; figures 6-6C * | 1,2 | F16D1/08<br>F16D41/06 |
| X | EP 0 015 674 A (KER-TRAIN)<br>* page 8, ligne 27 - page 9, ligne 22; figure 2 * | 1,2 | |
| X | LU 35 878 A (DOSSIER)<br>* page 9, alinéa 2; figures 4,5 * | 1,2 | |
| X | US 1 618 915 A (CONSTANTINESCO)<br>* page 2, ligne 70 - ligne 127; figures 3,4 * | 1,2 | |
| Y | DE 43 27 461 A (PRYM-WERKE)<br>* colonne 4, ligne 50 - colonne 5, ligne 62; figures 7,8 * | 1,2 | |
| Y | DE 10 42 309 B (BILSTEIN)<br>* colonne 3, ligne 48 - colonne 4, ligne 30; figures 1-4 * | 1,2 | **DOMAINES TECHNIQUES RECHERCHES (Int.Cl.6)** |
| E | FR 2 744 500 A (VAVRO) 8 août 1997<br>* page 1, ligne 18 - page 2, ligne 31; figures 1-3 * | 1,2 | F16D |

Le présent rapport a été établi pour toutes les revendications

| Lieu de la recherche | Date d'achèvement de la recherche | Examinateur |
|---|---|---|
| LA HAYE | 1 décembre 1997 | Baldwin, D |

CATEGORIE DES DOCUMENTS CITES

X : particulièrement pertinent à lui seul
Y : particulièrement pertinent en combinaison avec un
   autre document de la même catégorie
A : arrière–plan technologique
O : divulgation non–ecrite
P : document intercalaire

T : théorie ou principe à la base de l'invention
E : document de brevet antérieur, mais publié à la
   date de dépôt ou après cette date
D : cité dans la demande
L : cité pour d'autres raisons

         & : membre de la même famille, document correspondant

EPO FORM 1503 03.82 (P04C02)